# EUROPEAN PATENT SPECIFICATION

(11) **EP 3 293 299 B1**
(45) Date of publication and mention of the grant of the patent: **22.05.2024**
(21) Application number: 17189676.4
(22) Date of filing: 06.09.2017
(51) Int. Cl.: D06F 33/36, D06F 101/00, D06F 103/00, D06F 103/04, D06F 103/06, D06F 103/38, D06F 105/48, D06F 105/56, D06F 105/58

(54) **INTELLIGENT LAUNDRY METHOD AND DEVICE**
INTELLIGENTES WASCHVERFAHREN UND VORRICHTUNG
PROCÉDÉ ET DISPOSITIF DE BLANCHISSAGE INTELLIGENT

(30) Priority: 08.09.2016 CN 201610811478
(43) Date of publication of application: 14.03.2018
(73) Proprietor: Beijing Xiaomi Mobile Software Co., Ltd., Beijing 100085 (CN)
(72) Inventor: WU, Ke, Haidian District, Beijing 100085 (CN); LIU, Xinyu, Haidian District, Beijing 100085 (CN); XIE, Yan, Haidian District, Beijing 100085 (CN)
(74) Representative: Reeve, Nicholas Edward

(56) References cited:
- EP-A1- 2 067 429
- WO-A1-01/46509
- CN-A- 102 021 786
- DE-A1- 10 103 948
- DE-A1-102007 038 368
- US-A1- 2006 190 266
- US-A1- 2016 148 265

## Description

### FIELD

The present invention relates to intelligent device technologies, and more particularly, to an intelligent laundry method and device.

### BACKGROUND

A washing machine is an indispensable household appliance for daily life. With the development of internet technology, an intelligent washing machine has emerged. Intelligent washing machines integrate sensor technology, automatic identification technology and internet technology in the washing machine, making the washing machine more efficient and convenient to complete washing.

DE 10 2007 038368 A1 describes an intelligent washing machine, which is able to recognize a current user from a transponder unit, which the user is carrying. The user's transponder unit can have a memory, which stores user-defined preferred programs and/or operating settings for the user. These can include the type of laundry, temperature, spin speed, or the like, and information stored on the memory can be transferred from the transponder unit to the washing machine.

EP 2 067 429 A1 describes an intelligent washing machine, which is configured to identify an authorized user by means of a Zero Power Switch (ZPS) card, which is worn or carried by a user. In addition to being used to identify authorised users, the ZPS card can also be used to convey information concerning the laundry of the user. In particular, a user can choose to pick up and use a card that they believe is indicative of their current laundry. On detecting said user-selected card, the washing machine can automatically set a suitable program and options for said user.

DE 101 03948 A1 describes intelligent washing machine, which has a biometric identification device configured to identify a user. The machine can store cost data and usage and/or consumption information, of the user.

In order to solve problems in the related art, embodiments of the present disclosure provide an intelligent laundry method and device.

### SUMMARY

The present invention is defined by the appended claims to which reference should be made.

According to a first aspect of the invention, there is provided an intelligent laundry method. The intelligent laundry method includes: determining a current user of a washing machine; determining washing features of the user; determining washing parameters of laundry according to the washing features; and washing the laundry according to the washing parameters.

The washing features of the user include one or more of a washing interval, a quantity of the laundry, a weight of the laundry, a type of the laundry, material of the laundry, a dirty degree of the laundry and a cleanliness requirement of the laundry.

The washing parameters include a rotating speed, a washing duration and washing times.

Determining the washing features of the user includes: generating washing features of the user according to washing records of the user using the washing machine previously.

In at least one embodiment, determining the washing features of the user includes: obtaining an age and a gender of the user when the user is a new user; and determining washing features of the user based on the age and the gender of the user.

In at least one embodiment, determining the washing features of the user includes: generating washing features of the user according to washing records of family members of the user when the user is a new user.

In at least one embodiment, determining the washing features of the user includes: detecting a quantity, a weight, material and a dirty degree of the laundry; and determining the washing features of the user according to the quantity, the weight, the material and the dirty degree of the laundry.

When the washing features include a washing interval, a quantity of the laundry and a weight of the laundry, determining the washing parameters of the laundry according to the washing features includes: determining whether the washing interval, the quantity of the laundry and the weight of the laundry satisfy a first condition, wherein when the washing interval is greater than a first threshold, the quantity of the laundry is greater than a second threshold, and the weight of the laundry is greater than a third threshold, the first condition is satisfied;
when the washing interval, the quantity of the laundry and the weight of the laundry satisfy the first condition, determining the washing parameters including a first rotating speed, a first washing duration and a first washing times;
when the washing interval, the quantity of the laundry and the weight of the laundry do not satisfy the first condition, determining the washing parameters including a second rotating speed, a second washing duration and a second washing times, wherein the first rotating speed is greater than the second rotating speed, the first washing duration is greater than the second washing duration, the first washing times is greater than the second washing times.

When washing features include material of laundry, determining the washing parameters of the laundry according to the washing features includes: when the material of the laundry is silk or wool, determining the washing parameters including a third rotating speed, a third washing duration and a third washing times; when the material of the laundry is cotton, determining the washing parameters including a fourth rotating speed, a fourth washing duration and a fourth washing times, wherein the third rotating speed is greater than the fourth rotating speed, the third washing duration is greater than the fourth washing duration, the third washing times is greater than the fourth washing times.

In at least one embodiment, determining the current user of the washing machine includes: determining the user according to login information of the user logging into the washing machine.

In at least one embodiment, determining the current user of the washing machine includes: obtaining users accessing a home area network; and determining the user from the users accessing the home area network.

In at least one embodiment, determining the current user of the washing machine includes: determining family members according to data collected by a camera; and determining the user from the family members.

According to a second aspect of the invention, there is provided an intelligent laundry device. The intelligent laundry device includes: a first determining module, configured to determine a current user of a washing machine; a second determining module, configured to determine washing features of the user; a third determining module, configured to determine washing parameters of laundry according to the washing features; and a washing module, configured to wash the laundry according to the washing parameters.

The washing features of the user include one or more of a washing interval, a quantity of the laundry, a weight of the laundry, a type of the laundry, material of the laundry, a dirty degree of the laundry and a cleanliness requirement of the laundry.

The washing parameters include a rotating speed, a washing duration and washing times. The second determining module includes a first generating sub-module, configured to generate the washing features of the user according to washing records of the user using the washing machine previously.

In at least one embodiment, the second determining module includes: a first receiving sub-module, configured to obtain an age and a gender of the user when the user is a new user; and a first determining sub-module, configured to determine the washing features of the user according to the age and the gender of the user.

In at least one embodiment, the second determining module includes a second generating sub-module, configured to generate the washing features of the user according to washing records of family members of the user when the user is a new user.

In at least one embodiment, the second determining module includes: a detecting sub-module, configured to detect a quantity, a weight, material and a dirty degree of the laundry; and a second determining sub-module, configured to determine the washing features of the user according to the quantity, the weight, the material and the dirty degree of the laundry.

When the washing features include a washing interval, a quantity of the laundry and a weight of the laundry, the third determining module includes: a judging sub-module, configured to determine whether the washing interval, the quantity of the laundry and the weight of the laundry satisfy a first condition, wherein when the washing interval is greater than a first threshold, the quantity of the laundry is greater than a second threshold, and the weight of the laundry is greater than a third threshold, the first condition is satisfied; a third determining sub-module, configured to determine, the washing parameters including a first rotating speed, a first washing duration and a first washing times when the washing interval, the quantity of the laundry and the weight of the laundry satisfy the first condition; and a fourth determining sub-module, configured to determine the washing parameters including a second rotating speed, a second washing duration and a second washing times when the washing interval, the quantity of the laundry and the weight of the laundry do not satisfy the first condition, wherein the first rotating speed is greater than the second rotating speed, the first washing duration is greater than the second washing duration, the first washing times is greater than the second washing times.

When the washing features include material of the laundry, the third determining module includes: a fifth determining sub-module, configured to determine the washing parameters including a third rotating speed, a third washing duration and a third washing times, when the material of the laundry is silk or wool; and a sixth determining sub-module, configured to determine the washing parameters including a fourth rotating speed, a fourth washing duration and a fourth washing times when the material of the laundry is cotton, wherein the third rotating speed is greater than the fourth rotating speed, the third washing duration is greater than the fourth washing duration, the third washing times is greater than the fourth washing times.

In at least one embodiment, the first determining module includes a seventh determining module, configured to determine the user according to login information of the user logging into the washing machine.

In at least one embodiment, the first determining module includes: a second receiving sub-module, configured to obtain users accessing a home area network; and an eighth determining sub-module, configured to determine the user from the users accessing the home area network.

In at least one embodiment, the first determining module includes: a ninth determining sub-module, configured to determine family members according to data collected by a camera; and a tenth determining sub-module, configured to determine the user from the family members.

The technical solutions provided in embodiments of the present invention include following advantageous effects. When a user starts to wash laundry using a washing machine, the current user of the washing machine is determined first, and then washing features of the user are determined, washing parameters of laundry are determined according to the washing features, and finally the laundry is washed according to the washing parameters. The intelligent laundry method can adopt different washing parameters according to different users, and the process of determining washing parameters is done by the washing machine itself, without requiring participation of the user, making the laundry process more intelligent.

It is to be understood that, both the foregoing general description and the following detailed description are exemplary and explanatory only and are not restrictive of the present disclosure.

### BRIEF DESCRIPTION OF THE DRAWINGS

The accompanying drawings herein are incorporated in and become parts of the specification, illustrate embodiments consistent with the present disclosure and, together with the description, serve to explain principles of the present disclosure.
Fig. 1 is a flow chart showing an intelligent laundry method according to an exemplary embodiment.
Fig. 2 is a flow chart showing an intelligent laundry method according to an exemplary embodiment.
Fig. 3 is a flow chart showing an intelligent laundry method according to an exemplary embodiment.
Fig. 4 is a flow chart showing an intelligent laundry method according to an exemplary embodiment.
Fig. 5 is a flow chart showing an intelligent laundry method according to an exemplary embodiment.
Fig. 6 is a block diagram of an intelligent laundry device according to an exemplary embodiment.
Fig. 7 is a block diagram of an intelligent laundry device according to an exemplary embodiment.
Fig. 8 is a block diagram of an intelligent laundry device according to an exemplary embodiment.
Fig. 9 is a block diagram of an intelligent laundry device according to an exemplary embodiment.
Fig. 10 is a block diagram of an intelligent laundry device according to an exemplary embodiment.
Fig. 11 is a block diagram of an intelligent laundry device according to an exemplary embodiment.
Fig. 12 is a block diagram of an intelligent laundry device according to an exemplary embodiment.
Fig. 13 is a block diagram of an intelligent laundry device according to an exemplary embodiment.
Fig. 14 is a block diagram of an intelligent laundry device according to an exemplary embodiment.
Fig. 15 is a block diagram of an intelligent laundry device according to an exemplary embodiment.
Fig. 16 is a schematic diagram of an intelligent laundry device according to an exemplary embodiment.

### DETAILED DESCRIPTION

Reference will be made in detail to explain embodiments of the present disclosure, examples of which are illustrated in the accompanying drawings. The following description refers to the accompanying drawings in which the same numbers in different drawings represent the same or similar elements unless otherwise represented. The implementations set forth in the following description of exemplary embodiments do not represent all embodiments consistent with the present disclosure. Instead, they are merely examples of devices and methods consistent with aspects related to the present disclosure as recited in the appended claims.

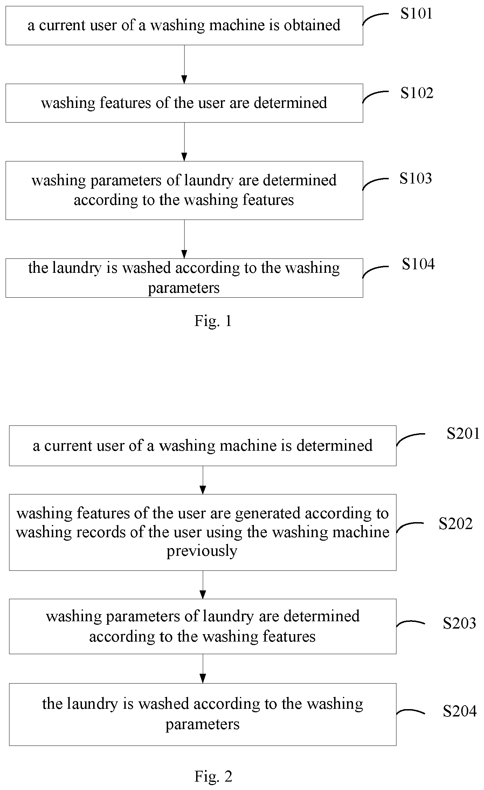

Fig. 1 is a flow chart showing an intelligent laundry method according to an exemplary embodiment. As shown in Fig. 1, the intelligent laundry method includes the following blocks.

At block S101, a current user of a washing machine is obtained.

The user using the washing machine currently is determined. That is, it is determined to which user the current laundry belongs. When there are multiple members in a family, such as grandfather, grandmother, father, mother and children, their laundry may be washed separately or may be washed together. In intelligent household appliances field, the intelligent household appliance needs to be connected to network, and users can operate the intelligent household appliance through a smartphone, a tablet computer and so on. In some embodiments of the present disclosure, the washing machine may be connected to a server in the network, and users log in the washing machine through an application (APP) on a smartphone. Therefore, in an implementation, the washing machine determines the current user of the washing machine according to login information of the user logging into the washing machine. When there are multiple members in the family, different members may use different accounts to log in the washing machine, and the current user of the washing machine can be determined according to the account.

In another implementation, all users accessing a home area network are obtained, and the current user of the washing machine is determined from all the users accessing the home area network. Usually, only family members can access the home area network. Thus, family members can be determined according to users accessing the home area network. When there is only one family member, this family member is the current user of the washing machine. When there are multiple family members, it is possible to prompt the user to make a selection. When the user selects a family member manually, the selected family member is the current user of the washing machine. The whole family can be treated as a single user, for example, a family of father, mother and children can be treated as a single user, and a family of the elderly and adult can be treated as another single user.

In yet another implementation, data is collected through a camera installed on the washing machine or at other place in the house, and family members are determined according to the data collected by the camera, and the current user is determined from family members. When there is only one family member, the family member is the current user of washing machine. When there are multiple family members, it is required to determine the current user of the washing machine from the multiple family members. In one implementation, it prompts the user to make a selection and the user manually selects a family member as the current user of the washing machine. In another implementation, the current user of the washing machine is determined according to auxiliary information collected by the camera such as the color and size of the laundry. In detail, it is determined whether the laundry belongs to adults or children according to the color and size of the laundry collected by the camera, and it is also determined whether the laundry belongs to male or female. In combination with family member information, the current user of the washing machine is automatically determined. The determining process does not require participation of the user, which is more intelligent.

At block S 102, washing features of the user are determined.

Different users have different washing features, and the washing features of the user include one or more of a washing interval, a quantity of the laundry, a weight of the laundry, a type of the laundry, material of the laundry, a dirty degree of the laundry and a cleanliness requirement of the laundry. The type of the laundry can be casual clothes, suits, shirts and so on, for example. The material of the laundry can be silk, cotton, wool and so on, for example. The dirty degree of the laundry can be divided into several grades, such as dirty, general dirty and clean. The cleanliness requirement of laundry can also be divided into several grades, such as high cleanliness requirement and general cleanliness requirement. Usually, female and children may have a high cleanliness requirement of the laundry, while male may have a general cleanliness requirement of the laundry.

For an old user who has used the washing machine previously, washing features of the old user can be generated according to washing records of the old user, in which the washing records can include a type, material, a dirty degree and a cleanliness requirement of the laundry. It can also detect the laundry of the user, and determine the washing features of the user according to the detecting result. For a new user using the washing machine for the first time, the washing features of the new user can be determined according to the gender and the age of the new user, and the pre-established correspondence relationship between the gender, the age and the washing features of the user, the washing features of the new user can also be generated according to washing records of other users in family members.

At block S103, washing parameters of laundry are determined according to the washing features.

The washing parameters include a rotating speed, a washing duration and washing times. Different washing features correspond to different washing parameters.

For example, when washing features include a washing interval, a quantity of the laundry and a weight of the laundry, the washing parameters of the laundry can be determined by follows.

It is determined whether the washing interval, the quantity of the laundry and the weight of the laundry satisfy a first condition. When the washing interval is greater than a first threshold, the quantity of the laundry is greater than a second threshold, and the weight of the laundry is greater than a third threshold, the first condition is satisfied, in which the first threshold, the second threshold and the third threshold are preset.

When the washing interval, the quantity of the laundry and the weight of the laundry satisfy the first condition, the washing parameters including a first rotating speed, a first washing duration and a first washing times are determined. When the washing interval, the quantity of the laundry and the weight of the laundry do not satisfy the first condition, the washing parameters including a second rotating speed, a second washing duration and a second washing times are determined, in which the first rotating speed is greater than the second rotating speed, the first washing duration is greater than the second washing duration, and the first washing times is greater than the second washing times.

When washing features include material of laundry, washing parameters of the laundry can be determined by followings. When the material of the laundry is silk or wool, the washing parameters including a third rotating speed, a third washing duration and a third washing times are determined. When the material of the laundry is cotton, the washing parameters including a fourth rotating speed, a fourth washing duration and a fourth washing times are determined, in which the third rotating speed is greater than the fourth rotating speed, the third washing duration is greater than the fourth washing duration, and the third washing times is greater than the fourth washing times. Since silk and wool belong to soft material, it is not suitable to adopt a high rotating speed, and a long washing duration is needed.

When washing features include a cleanliness requirement, the washing duration and the washing times in washing parameters of the user with a high cleanliness requirement are greater than those of the user with a low cleanliness requirement. When washing features include a type of laundry, washing parameters are determined according to the type of the laundry. For example, suits and shirts are usually worn in the office, and have a high cleanliness requirement, and thus a long washing duration and more washing times are selected, while a high rotating speed may deform the laundry, and thus a low rotating speed is selected. For casual clothes and other clothes, it can adopt a high rotating speed, a moderate washing duration and moderate washing times. When washing features include a dirty degree of laundry, different rotating speed, washing duration and washing times can be determined according to the dirty degree of the laundry, in which the dirtier the laundry is, the higher the rotating speed is, the longer the washing duration is, and the more the washing times is.

Only examples are illustrated here, and washing features can also be determined by other means.

At block S 104, the laundry is washed according to the washing parameters.

In some embodiments, when a user starts to wash laundry using a washing machine, the current user of the washing machine is first determined, and then washing features of the user are determined, and washing parameters of laundry are determined according to the washing features, and finally the laundry is washed according to the washing parameters. The intelligent laundry method can adopt different washing parameters according to different users, and the process of determining washing parameters is done by the washing machine itself, without requiring participation of the user, making the laundry process more intelligent.

Fig. 2 is a flow chart showing an intelligent laundry method according to an exemplary embodiment. As shown in Fig. 2, the intelligent laundry method includes the following blocks.

At block S201, a current user of a washing machine is determined.

At block S202, washing features of the user are generated according to washing records of the user using the washing machine previously.

The washing features of the user include one or more of a washing interval, a quantity of the laundry, a weight of the laundry, a type of the laundry, material of the laundry, a dirty degree of the laundry and a cleanliness requirement of the laundry. Each time after a user uses a washing machine, the washing machine will generate a washing record. The washing record includes the user of this washing, the washing interval, the quantity of the laundry, the weight of the laundry, the material of the laundry, the type of the laundry, the dirty degree of the laundry and the cleanliness requirement of the laundry. In the subsequent practice, washing features of the user can be generated according to washing records of the user.

At block S203, washing parameters of laundry are determined according to the washing features.

At block S204, the laundry is washed according to the washing parameters.

In some embodiments, when a user starts to wash laundry using a washing machine, the current user of the washing machine is determined first, and then washing features of the user are generated according to washing records of the user using the washing machine previously, and washing parameters of laundry are determined according to the washing features, and finally the laundry is washed according to the washing parameters. The intelligent laundry method can adopt different washing parameters according to different users, and the process of determining washing parameters is done by the washing machine itself, without requiring participation of the user, making the laundry process more intelligent.

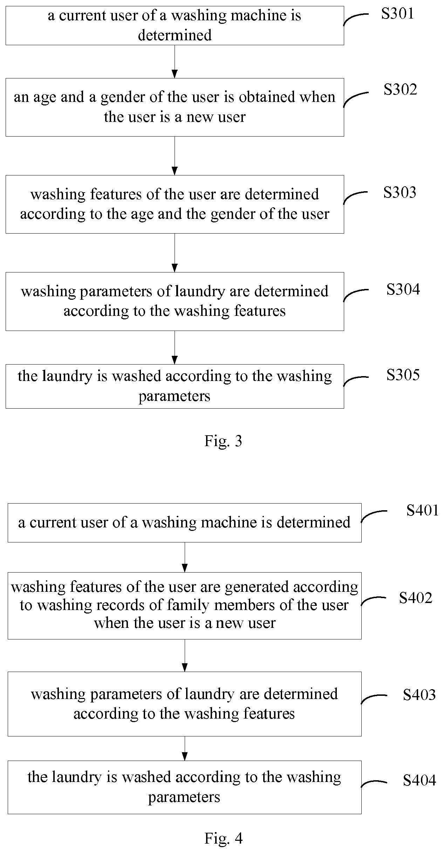

Fig. 3 is a flow chart showing an intelligent laundry method according to an exemplary embodiment. As shown in Fig. 3, the intelligent laundry method includes the following blocks.

At block S301, a current user of a washing machine is determined.

At block S302, an age and a gender of the user is obtained when the user is a new user.

A new user is a user who did not use the washing machine to wash laundry before, and thus washing records of the user cannot be stored in the washing machine, and washing features of the user cannot be generated according to the washing records. Therefore, in some embodiments, an age and a gender of the user are obtained, and the washing features of the user are determined according to the age and the gender of the user. The age and the gender of the user can be manually inputted by the user via an APP of an intelligent device, or the age and the gender of the user can be estimated according to images of the user collected by a camera.

At block S303, washing features of the user are determined according to the age and the gender of the user.

A correspondence relationship between the age and the gender of the user and the washing features of the user can be predefined in the washing machine. In the subsequent practice, when a new user uses the washing machine, the washing features of the user can be determined according to the age and the gender of the user and the correspondence relationship. The correspondence relationship is obtained by analyzing a large number of washing features of users through big data analysis.

At block S304, washing parameters of laundry are determined according to the washing features.

At block S305, the laundry is washed according to the washing parameters.

In some embodiments, when a user starts to wash laundry using a washing machine, the current user of the washing machine is determined first. When the user is a new user, an age and a gender of the user are determined, and washing features of the user are determined according to the age and the gender of the user, and further washing parameters of laundry are determined according to the washing features, and finally the laundry is washed according to the washing parameters. The intelligent laundry method can adopt different washing parameters according to different users, and the process of determining washing parameters is done by the washing machine itself, without requiring participation of the user, making the laundry process more intelligent.

Fig. 4 is a flow chart showing an intelligent laundry method according to an exemplary embodiment. As shown in Fig. 4, the intelligent laundry method includes the following blocks.

At block S401, a current user of a washing machine is determined.

At block S402, washing features of the user are generated according to washing records of family members of the user when the user is a new user.

In a family, washing features between family members may usually be similar. Therefore, for a newly added family member, washing features of the newly added family member can be generated according to washing records of family members already in the family. For example, the washing interval, the quantity of laundry and the weight of laundry can be taken as an average value of those of multiple family members. When most of family members have a high cleanliness requirement, it can be determined that the cleanliness requirement of the new user is also high. The dirty degree can be determined according to the dirty degree of the laundry of other members of the same gender in the family. When the dirty degree of the laundry of other members of the same gender in the family is general dirty, it is determined that the dirty degree of the laundry in washing features of the new user is general dirty. The material of the laundry can be determined according to the material used by most of family members. For example, when there are three members in the family, the material of the laundry of each family member includes cotton and wool, and the material of the laundry of only one family member further includes silk, then it can be determined that the material of the laundry of the new user includes cotton and wool. The type of the laundry can be the same as the type of the laundry of other members of the same gender in the family.

At block S403, washing parameters of laundry are determined according to the washing features.

At block S404, the laundry is washed according to the washing parameters.

In some embodiments, when a user starts to wash laundry using a washing machine, the current user of the washing machine is determined first. When the user is a new user, washing features of the user are generated according to washing records of family members of the user, and further washing parameters of laundry are determined according to the washing features, and finally the laundry is washed according to the washing parameters. The intelligent laundry method can adopt different washing parameters according to different users, and the process of determining washing parameters is done by the washing machine itself, without requiring participation of the user, making the laundry process more intelligent.

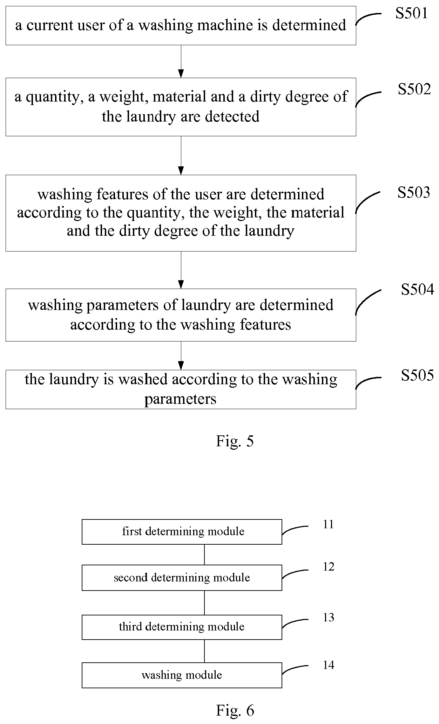

Fig. 5 is a flow chart showing an intelligent laundry method according to an exemplary embodiment. As shown in Fig. 5, the intelligent laundry method includes the following blocks.

At block S501, a current user of a washing machine is determined.

At block S502, a quantity, a weight, material and a dirty degree of the laundry are detected.

In detail, the quantity, the material and the dirty degree of the laundry can be obtained according to analysis of data collected by a camera. When the user puts the laundry into the washing machine, the user usually puts the laundry into the washing machine one by one. In this case, the camera on the washing machine can take a picture of each piece of clothing, and the quantity, the material and the dirty degree of the laundry can be determined according to the data collected by the camera. The dirty degree and the material of the laundry can also be determined by other means, for example, the material and the dirty degree of the laundry can also be determined by spectral analysis. Laundry of different material emits different light, and thus the material of the laundry can be determined according to the light emitted from the laundry. For a same laundry, the light emitted from clean spots and grease spots will vary, and the dirty degree of the laundry can also be determined based on this. The weight of the laundry can be measured by the gravity sensor installed in the washing machine.

At block S503, washing features of the user are determined according to the quantity, the weight, the material and the dirty degree of the laundry.

At block S504, washing parameters of laundry are determined according to the washing features.

At block S505, the laundry is washed according to the washing parameters.

In some embodiments, when a user starts to wash laundry using a washing machine, the current user of the washing machine is first determined, and then a quantity, a weight, material and a dirty degree of the laundry are detected, and washing features of the user are determined according to the quantity, the weight, the material and the dirty degree of the laundry, and further washing parameters of laundry are determined according to the washing features, and finally the laundry is washed according to the washing parameters. The intelligent laundry method can adopt different washing parameters according to different users, and the process of determining washing parameters is done by the washing machine itself, without requiring participation of the user, making the laundry process more intelligent.

Fig. 6 is a block diagram of an intelligent laundry device according to an exemplary embodiment. As shown in Fig. 6, the intelligent laundry device includes a first determining module 11, a second determining module 12, a third determining module 13 and a washing module 14.

The first determining module 11 is configured to determine a current user of a washing machine. The second determining module 12 is configured to determine washing features of the user. The third determining module 13 is configured to determine washing parameters of laundry according to the washing features. The washing module 14 is configured to wash the laundry according to the washing parameters.

In at least one embodiment, the washing features of the user include one or more of a washing interval, a quantity of the laundry, a weight of the laundry, a type of the laundry, material of the laundry, a dirty degree of the laundry and a cleanliness requirement of the laundry.

In at least one embodiment, the washing parameters include a rotating speed, a washing duration and washing durations.

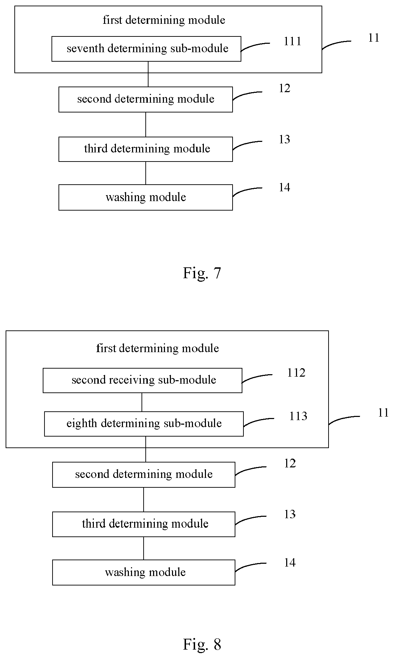

Fig. 7 is a block diagram of an intelligent laundry device according to an exemplary embodiment. As shown in Fig. 7, on the basis of the intelligent laundry device shown in Fig. 6, the first determining module 11 includes a seventh determining sub-module 111.

The seventh determining sub-module 111 is configured to determine the user according to login information of the user logging into the washing machine.

Fig. 8 is a block diagram of an intelligent laundry device according to an exemplary embodiment. As shown in Fig. 8, on the basis of the intelligent laundry device shown in Fig. 6, the first determining module 11 includes a second receiving sub-module 112 and an eighth determining sub-module 113.

The second receiving sub-module 112 is configured to obtain users accessing a home area network.

The eighth determining sub-module 113 is configured to determine the user from the users accessing the home area network.

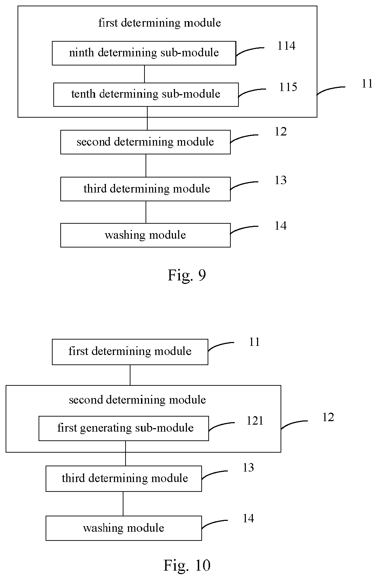

Fig. 9 is a block diagram of an intelligent laundry device according to an exemplary embodiment. As shown in Fig. 9, on the basis of the intelligent laundry device shown in Fig. 6, the first determining module 11 includes a ninth determining sub-module 114 and a tenth determining sub-module 115.

The ninth determining sub-module 114 is configured to determine family members according to data collected by a camera

The tenth determining sub-module 115 is configured to determine the user from family members.

Fig. 10 is a block diagram of an intelligent laundry device according to an exemplary embodiment. As shown in Fig. 10, on the basis of the intelligent laundry device shown in Fig. 6, the second determining module 12 includes a first generating sub-module 121.

The first generating sub-module 121 is configured to generate the washing features of the user according to washing records of the user using the washing machine previously.

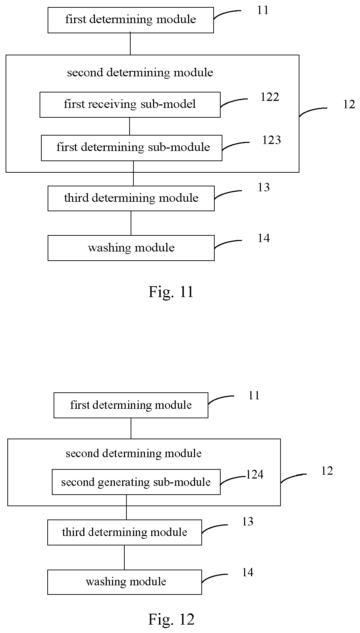

Fig. 11 is a block diagram of an intelligent laundry device according to an exemplary embodiment. As shown in Fig. 11, on the basis of the intelligent laundry device shown in Fig. 6, the second determining module 12 includes a first receiving sub-module 122 and a first determining sub-module 123.

The first receiving sub-module 122 is configured to obtain an age and a gender of the user when the user is a new user.

The first determining sub-module 123 is configured to determine the washing features of the user according to the age and the gender of the user.

Fig. 12 is a block diagram of an intelligent laundry device according to an exemplary embodiment. As shown in Fig. 12, and on the basis of the intelligent laundry device shown in Fig. 6, the second determining module 12 includes a second generating sub-module 124.

The second generating sub-module 124 is configured to generate the washing features of the user based on washing records of family members of the user when the user is a new user.

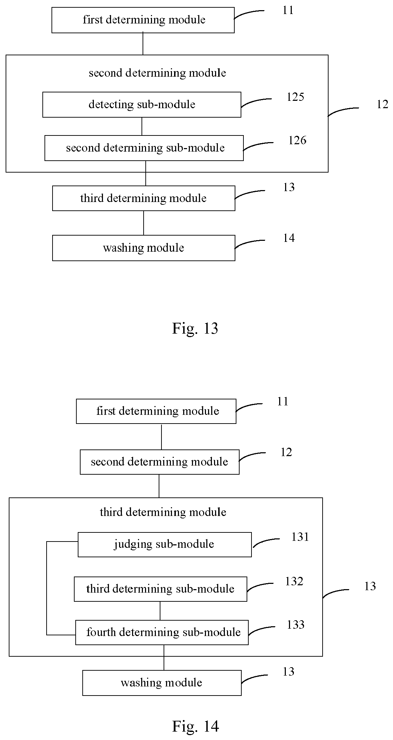

Fig. 13 is a block diagram of an intelligent laundry device according to an exemplary embodiment. As shown in Fig. 13, and on the basis of the intelligent laundry device shown in Fig. 6, the second determining module 12 includes a detecting sub-module 125 and a second determining sub-module 126.

The detecting sub-module 125 is configured to detect a quantity, a weight, material and a dirty degree of the laundry.

The second determining sub-module 126 is configured to determine the washing features of the user according to the quantity, the weight, the material and the dirty degree of the laundry.

Fig. 14 is a block diagram of an intelligent laundry device according to an exemplary embodiment. As shown in Fig. 14, and on the basis of the intelligent laundry device shown in Fig. 6, when the washing features include a washing interval, a quantity of the laundry and a weight of the laundry, the third determining module 13 includes a judging sub-module 131, a third determining sub-module 132 and a fourth determining sub-module 133.

The judging module 131 is configured to determine whether the washing interval, the quantity of the laundry and the weight of the laundry satisfy a first condition, in which, when the washing interval is greater than a first threshold, the quantity of the laundry is greater than a second threshold, and the weight of the laundry is greater than a third threshold, the first condition is satisfied.

The third determining sub-module 132 is configured to determine the washing parameters including a first rotating speed, a first washing duration and a first washing times, when the washing interval, the quantity of the laundry and the weight of the laundry satisfy the first condition.

The fourth determining sub-module 133 is configured to determine the washing parameters including a second rotating speed, a second washing duration and a second washing times when the washing interval, the quantity of the laundry and the weight of the laundry do not satisfy the first condition, in which the first rotating speed is greater than the second rotating speed, the first washing duration is greater than the second washing duration, and the first washing times is greater than the second washing times.

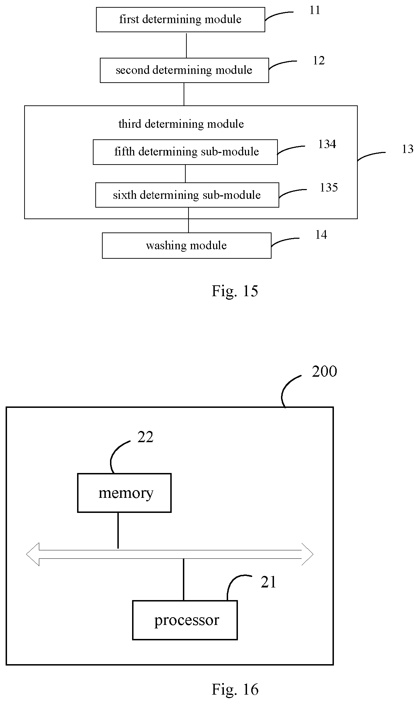

Fig. 15 is a block diagram of an intelligent laundry device according to an exemplary embodiment. As shown in Fig. 15, and on the basis of the intelligent laundry device shown in Fig. 6, when washing features include material of the laundry, the third determining module 13 includes a fifth determining sub-module 134 and a sixth determining sub-module 135.

The fifth determining sub-module 134 is configured to determine the washing parameters including a third rotating speed, a third washing duration and a third washing times when the material of the laundry is silk or wool.

The sixth determining sub-module 135 is configured to determine the washing parameters including a fourth rotating speed, a fourth washing duration and a fourth washing times when the material of the laundry is cotton, in which the third rotating speed is greater than the fourth rotating speed, the third washing duration is greater than the fourth washing duration, and the third washing times is greater than the fourth washing times.

Fig. 16 is a schematic diagram of an intelligent laundry device according to an exemplary embodiment. As shown in Fig. 16, the intelligent laundry device 200 includes a processor 21 and a memory 22. The memory 22 is configured to store instructions executable by processor 21, and the memory 22 is connected to and communicates with the processor 21 through a system bus. The processor 21 is configured to: determine a current user of a washing machine; determine washing features of the user; determine washing parameters of laundry according to the washing features; and wash the laundry according to the washing parameters.

In the above embodiments, it is to be understood that, the processor can be a central processing unit (CPU for short), can also be other general purpose processor, digital signal processor (DSP for short), and application specific integrated circuit (ASIC for short). The general purpose processor can be either a microprocessor or any conventional processor. The memory can be a read-only memory (ROM for short), a random access memory (RAM for short), a flash memory, and a hard disk or a solid state disk. The methods disclosed in embodiments of the present disclosure can be directly executed by the hardware processor, or can be executed by the combination of hardware and software module in the processor.

The invention is defined by the appended claims.

## Claims

1. An intelligent laundry method, comprising:
determining a current user of a washing machine (101, 201, 301, 401, 501);
determining washing features of the user (102), wherein the washing features of the user comprise one or more of a washing interval, a quantity of the laundry, a weight of the laundry, a type of the laundry, material of the laundry, a dirty degree of the laundry and a cleanliness requirement of the laundry;
determining washing parameters of laundry according to the washing features (103, 203, 304, 403, 504), wherein the washing parameters comprise a rotating speed, a washing duration and washing times; and
washing the laundry according to the washing parameters (104. 204, 305,404, 505)
**characterized in that:**
determining the washing features of the user (102) comprises:
generating the washing features of the user according to washing records of the user using the washing machine previously (202);
when the washing features comprise a washing interval, a quantity of the laundry and a weight of the laundry, determining the washing parameters of the laundry according to the washing features (103, 203, 304, 403, 504) comprises:
determining whether the washing interval, the quantity of the laundry and the weight of the laundry satisfy a first condition, wherein when the washing interval is greater than a first threshold, the quantity of the laundry is greater than a second threshold, and the weight of the laundry is greater than a third threshold, the first condition is satisfied;
when the washing interval, the quantity of the laundry and the weight of the laundry satisfy the first condition, determining the washing parameters comprising a first rotating speed, a first washing duration and a first washing times; and
when the washing interval, the quantity of the laundry and the weight of the laundry do not satisfy the first condition, determining the washing parameters comprising a second rotating speed, a second washing duration and a second washing times, wherein the first rotating speed is greater than the second rotating speed, the first washing duration is greater than the second washing duration, the first washing times is greater than the second washing times;
when the washing features comprise material of the laundry, determining the washing parameters of the laundry according to the washing features (103, 203, 304, 403, 504) comprises:
when the material of the laundry is silk or wool, determining the washing parameters comprising a third rotating speed, a third washing duration and a third washing times; and
when the material of the laundry is cotton, determining the washing parameters comprising a fourth rotating speed, a fourth washing duration and a fourth washing times, wherein the third rotating speed is greater than the fourth rotating speed, the third washing duration is greater than the fourth washing duration, the third washing times is greater than the fourth washing times.

2. The intelligent laundry method according to claim 1, wherein determining the washing features of the user (102) comprises:
obtaining an age and a gender of the user when the user is a new user (302); and
determining the washing features of the user according to the age and the gender of the user (303).

3. The intelligent laundry method according to claim 1 or 2, wherein determining the washing features of the user (102) comprises:
generating the washing features of the user according to washing records of family members of the user when the user is a new user (402).

4. The intelligent laundry method according to any one of claims 1 to 3, wherein determining the washing features of the user comprises:
detecting a quantity, a weight, material and a dirty degree of the laundry (502); and
determining the washing features of the user according to the quantity, the weight, the material and the dirty degree of the laundry (503).

5. The intelligent laundry method according to any one of claims 1 to 4, wherein determining the current user of the washing machine (101, 201, 301, 401, 501) comprises:
determining the user according to login information of the user logging into the washing machine;
or
obtaining users accessing a home area network, and determining the user from the users accessing the home area network;
or
determining family members according to data collected by a camera, and determining the user from the family members.

6. An intelligent laundry device, comprising:
a first determining module (11), configured to determine a current user of a washing machine;
a second determining module (12), configured to determine washing features of the user, wherein the washing features of the user comprise one or more of a washing interval, a quantity of the laundry, a weight of the laundry, a type of the laundry, material of the laundry, a dirty degree of the laundry and a cleanliness requirement of the laundry;
a third determining module (13), configured to determine washing parameters of laundry according to the washing features, wherein the washing parameters comprise a rotating speed, a washing duration and washing times; and
a washing module (14), configured to wash the laundry according to the washing parameters
**characterized in that:**
the second determining module (12) comprises a first generating sub-module (121), configured to generate the washing features of the user according to washing records of the user using the washing machine previously;
when the washing features comprise a washing interval, a quantity of the laundry and a weight of the laundry, the third determining module (13) comprises:
a judging sub-module (131), configured to determine whether the washing interval, the quantity of the laundry and the weight of the laundry satisfy a first condition, wherein when the washing interval is greater than a first threshold, the quantity of the laundry is greater than a second threshold, and the weight of the laundry is greater than a third threshold, the first condition is satisfied;
a third determining sub-module (132), configured to determine the washing parameters comprising a first rotating speed, a first washing duration and a first washing times, when the washing interval, the quantity of the laundry and the weight of the laundry satisfy the first condition; and
a fourth determining sub-module (133), configured to determine the washing parameters comprising a second rotating speed, a second washing duration and a second washing times, when the washing interval, the quantity of the laundry and the weight of the laundry do not satisfy the first condition, wherein the first rotating speed is greater than the second rotating speed, the first washing duration is greater than the second washing duration, the first washing times is greater than the second washing times;
when the washing features comprise material of the laundry, the third determining module (13) comprises:
a fifth determining sub-module (134), configured to determine the washing parameters comprising a third rotating speed, a third washing duration and a third washing times, when the material of the laundry is silk or wool; and
a sixth determining sub-module (135), configured to determine the washing parameters comprising a fourth rotating speed, a fourth washing duration and a fourth washing times when the material of the laundry is cotton, wherein the third rotating speed is greater than the fourth rotating speed, the third washing duration is greater than the fourth washing duration, the third washing times is greater than the fourth washing times.

7. The intelligent laundry device according to claim 6, wherein the second determining module (12) further comprises:
a first receiving sub-module (122), configured to obtain an age and a gender of the user when the user is a new user; and
a first determining sub-module (123), configured to determine the washing features of the user according to the age and the gender of the user.

8. The intelligent laundry device according to claim 6 or 7, wherein the second determining module (12) further comprises:
a second generating sub-module (124), configured to generate the washing features of the user according to washing records of family members of the user when the user is a new user;
or
the second determining module (12) comprises:
a detecting sub-module (125), configured to detect a quantity, a weight, material and a dirty degree of the laundry; and
a second determining sub-module (126), configured to determine the washing features of the user according to the quantity, the weight, the material and the dirty degree of the laundry.

9. The intelligent laundry device according to claim 8, wherein the first determining module (11) comprises:
a seventh determining sub-module (111), configured to determine the user according to login information of the user logging into the washing machine;
or
the first determining module (11) comprises:
a second receiving sub-module (112), configured to obtain users accessing a home area network; and
an eighth determining sub-module (113), configured to determine the user from the users accessing the home area network;
or
the first determining module (11) comprises:
a ninth determining sub-module (114), configured to determine family members according to data collected by a camera; and
a tenth determining sub-module (115), configured to determine the user from the family members.

## Patentansprüche

1. Intelligentes Waschverfahren, das Folgendes beinhaltet:
Bestimmen eines aktuellen Benutzers einer Waschmaschine (101, 201, 301, 401, 501);
Bestimmen von Waschmerkmalen des Benutzers (102), wobei die Waschmerkmale des Benutzers eines oder mehrere von einem Waschintervall, einer Wäschemenge, einem Wäschegewicht, einem Wäschetyp, einem Wäschematerial, einem Verschmutzungsgrad der Wäsche und einem Sauberkeitsbedarf der Wäsche umfassen;
Bestimmen von Waschparametern von Wäsche gemäß den Waschmerkmalen (103, 203, 304, 403, 504), wobei die Waschparameter eine Drehgeschwindigkeit, eine Waschdauer und eine Waschhäufigkeit umfassen; und
Waschen der Wäsche gemäß den Waschparametern (104, 204, 305, 404, 505),
**dadurch gekennzeichnet, dass**:
das Bestimmen der Waschmerkmale des Benutzers (102) Folgendes beinhaltet:
Erzeugen der Waschmerkmale des Benutzers gemäß Waschdatensätzen des Benutzers, der die Waschmaschine zuvor benutzt hat (202);
wobei, wenn die Waschmerkmale ein Waschintervall, eine Wäschemenge und ein Wäschegewicht umfassen, das Bestimmen der Waschparameter der Wäsche gemäß den Waschmerkmalen (103, 203, 304, 403, 504) Folgendes beinhaltet:
Feststellen, ob das Waschintervall, die Wäschemenge und das Wäschegewicht eine erste Bedingung erfüllen, wobei, wenn das Waschintervall größer als ein erster Schwellenwert ist, die Wäschemenge größer als ein zweiter Schwellenwert ist und das Wäschegewicht größer als ein dritter Schwellenwert ist, die erste Bedingung erfüllt ist;
wobei, wenn das Waschintervall, die Wäschemenge und das Wäschegewicht die erste Bedingung erfüllen, das Bestimmen der Waschparameter eine erste Drehgeschwindigkeit, eine erste Waschdauer und eine erste Waschhäufigkeit beinhaltet; und
wobei, wenn das Waschintervall, die Wäschemenge und das Wäschegewicht die erste Bedingung nicht erfüllen, das Bestimmen der Waschparameter eine zweite Drehgeschwindigkeit, eine zweite Waschdauer und eine zweite Waschhäufigkeit beinhaltet, wobei die erste Drehgeschwindigkeit höher als die zweite Drehgeschwindigkeit ist, die erste Waschdauer länger als die zweite Waschdauer ist, die erste Waschhäufigkeit größer als die zweite Waschhäufigkeit ist;
wobei, wenn die Waschmerkmale Wäschematerial umfassen, das Bestimmen der Waschparameter der Wäsche gemäß den Waschmerkmalen (103, 203, 304, 403, 504) Folgendes beinhaltet:
wenn das Wäschematerial Seide oder Wolle ist, beinhaltet das Bestimmen der Waschparameter eine dritte Drehgeschwindigkeit, eine dritte Waschdauer und eine dritte Waschhäufigkeit; und
wenn das Wäschematerial Baumwolle ist, beinhaltet das Bestimmen der Waschparameter eine vierte Drehgeschwindigkeit, eine vierte Waschdauer und eine vierte Waschhäufigkeit, wobei die dritte Drehgeschwindigkeit höher als die vierte Drehgeschwindigkeit ist, die dritte Waschdauer länger als die vierte Waschdauer ist, die dritte Waschhäufigkeit größer als die vierte Waschhäufigkeit ist.

2. Intelligentes Waschverfahren nach Anspruch 1, wobei das Bestimmen der Waschmerkmale des Benutzers (102) Folgendes beinhaltet:
Erhalten eines Alters und eines Geschlechts des Benutzers, wenn der Benutzer ein neuer Benutzer ist (302); und
Bestimmen der Waschmerkmale des Benutzers gemäß dem Alter und dem Geschlecht des Benutzers (303).

3. Intelligentes Waschverfahren nach Anspruch 1 oder 2, wobei das Bestimmen der Waschmerkmale des Benutzers (102) Folgendes beinhaltet:
Erzeugen der Waschmerkmale des Benutzers gemäß Waschdatensätzen von Familienmitgliedern des Benutzers, wenn der Benutzer ein neuer Benutzer ist (402).

4. Intelligentes Waschverfahren nach einem der Ansprüche 1 bis 3, wobei das Bestimmen der Waschmerkmale des Benutzers Folgendes beinhaltet:
Erkennen einer Menge, eines Gewichts, eines Materials und eines Verschmutzungsgrads der Wäsche (502); und
Bestimmen der Waschmerkmale des Benutzers gemäß Menge, Gewicht, Material und Verschmutzungsgrad der Wäsche (503).

5. Intelligentes Waschverfahren nach einem der Ansprüche 1 bis 4, wobei das Bestimmen des aktuellen Benutzers der Waschmaschine (101, 201, 301, 401, 501) Folgendes beinhaltet:
Bestimmen des Benutzers anhand der Login-Informationen des Benutzers, der sich bei der Waschmaschine einloggt; oder
Ermitteln von Benutzern, die auf ein Heimnetzwerk zugreifen, und Bestimmen des Benutzers aus den Benutzern, die auf das Heimnetzwerk zugreifen; oder
Bestimmen von Familienmitgliedern anhand von von einer Kamera gesammelten Daten und Bestimmen des Benutzers aus den Familienmitgliedern.

6. Intelligentes Waschgerät, das Folgendes umfasst:
ein erstes Bestimmungsmodul (11), das zum Bestimmen eines aktuellen Benutzers einer Waschmaschine konfiguriert ist;
ein zweites Bestimmungsmodul (12), das zum Bestimmen von Waschmerkmalen des Benutzers konfiguriert ist, wobei die Waschmerkmale des Benutzers eines oder mehrere aus einem Waschintervall, einer Wäschemenge, einem Wäschegewicht, einem Wäschetyp, einem Wäschematerial, einem Verschmutzungsgrad der Wäsche und einem Sauberkeitsbedarf der Wäsche umfassen;
ein drittes Bestimmungsmodul (13), das zum Bestimmen von Waschparametern von Wäsche gemäß den Waschmerkmalen konfiguriert ist, wobei die Waschparameter eine Drehgeschwindigkeit, eine Waschdauer und Waschhäufigkeit umfassen; und
ein Waschmodul (14), das zum Waschen der Wäsche gemäß den Waschparametern konfiguriert ist,
**dadurch gekennzeichnet, dass**:
das zweite Bestimmungsmodul (12) ein erstes Erzeugungssubmodul (121) umfasst, das zum Erzeugen der Waschmerkmale des Benutzers gemäß Waschdatensätzen des Benutzers konfiguriert ist, der die Waschmaschine zuvor verwendet hat;
wobei das dritte Bestimmungsmodul (13), wenn die Waschmerkmale ein Waschintervall, eine Wäschemenge und ein Wäschegewicht umfassen, Folgendes umfasst:
ein Beurteilungssubmodul (131), konfiguriert zum Feststellen, ob das Waschintervall, die Wäschemenge und das Wäschegewicht eine erste Bedingung erfüllen, wobei, wenn das Waschintervall größer als ein erster Schwellenwert ist, die Wäschemenge größer als ein zweiter Schwellenwert ist und das Wäschegewicht größer als ein dritter Schwellenwert ist, die erste Bedingung erfüllt ist;
ein drittes Bestimmungssubmodul (132), konfiguriert zum Bestimmen der Waschparameter, die eine erste Drehgeschwindigkeit, eine erste Waschdauer und eine erste Waschhäufigkeit umfassen, wenn das Waschintervall, die Wäschemenge und das Wäschegewicht die erste Bedingung erfüllen; und
ein viertes Bestimmungssubmodul (133), konfiguriert zum Bestimmen der Waschparameter, die eine zweite Drehgeschwindigkeit, eine zweite Waschdauer und eine zweite Waschhäufigkeit umfassen, wenn das Waschintervall, die Wäschemenge und das Wäschegewicht die erste Bedingung nicht erfüllen, wobei die erste Drehgeschwindigkeit höher als die zweite Drehgeschwindigkeit ist, die erste Waschdauer länger als die zweite Waschdauer ist, die erste Waschhäufigkeit größer als die zweite Waschhäufigkeit ist;
wobei, wenn die Waschmerkmale Wäschematerial umfassen, das dritte Bestimmungsmodul (13) Folgendes umfasst:
ein fünftes Bestimmungssubmodul (134), konfiguriert zum Bestimmen der Waschparameter, die eine dritte Drehgeschwindigkeit, eine dritte Waschdauer und eine dritte Waschhäufigkeit umfassen, wenn das Wäschematerial Seide oder Wolle ist; und
ein sechstes Bestimmungssubmodul (135), konfiguriert zum Bestimmen der Waschparameter, die eine vierte Drehgeschwindigkeit, eine vierte Waschdauer und eine vierte Waschhäufigkeit umfassen, wenn das Wäschematerial Baumwolle ist, wobei die dritte Drehgeschwindigkeit höher als die vierte Drehgeschwindigkeit ist, die dritte Waschdauer länger als die vierte Waschdauer ist und die dritte Waschhäufigkeit größer als die vierte Waschhäufigkeit ist.

7. Intelligentes Waschgerät nach Anspruch 6, wobei das zweite Bestimmungsmodul (12) ferner Folgendes umfasst:
ein erstes Empfangssubmodul (122), konfiguriert zum Erhalten eines Alters und eines Geschlechts des Benutzers ist, wenn der Benutzer ein neuer Benutzer ist; und
ein erstes Bestimmungssubmodul (123), konfiguriert zum Bestimmen der Waschmerkmale des Benutzers gemäß dem Alter und dem Geschlecht des Benutzers.

8. Intelligentes Waschgerät nach Anspruch 6 oder 7, wobei das zweite Bestimmungsmodul (12) ferner Folgendes umfasst:
ein zweites Erzeugungssubmodul (124), konfiguriert zum Erzeugen der Waschmerkmale des Benutzers gemäß Waschdatensätzen von Familienmitgliedern des Benutzers, wenn der Benutzer ein neuer Benutzer ist; oder
das zweite Bestimmungsmodul (12) Folgendes umfasst:
ein Erkennungssubmodul (125), konfiguriert zum Erkennen einer Menge, eines Gewicht, eines Materials und eines Verschmutzungsgrads der Wäsche; und
ein zweites Bestimmungssubmodul (126), konfiguriert zum Bestimmen der Waschmerkmale des Benutzers gemäß Menge, Gewicht, Material und Verschmutzungsgrad der Wäsche.

9. Intelligentes Waschgerät nach Anspruch 8, wobei das erste Bestimmungsmodul (11) Folgendes umfasst:
ein siebtes Bestimmungssubmodul (111), konfiguriert zum Bestimmen des Benutzer gemäß Login-Informationen des Benutzers, der sich in die Waschmaschine einloggt; oder
das erste Bestimmungsmodul (11) Folgendes umfasst:
ein zweites Empfangssubmodul (112), konfiguriert zum Ermitteln von Benutzern, die auf ein Heimnetzwerk zugreifen; und
ein achtes Bestimmungsuntermodul (113), konfiguriert zum Bestimmen des Benutzers aus den auf das Heimnetzwerk zugreifenden Benutzern; oder
das erste Bestimmungsmodul (11) Folgendes umfasst:
ein neuntes Bestimmungssubmodul (114), konfiguriert zum Bestimmen von Familienmitgliedern gemäß den von einer Kamera gesammelten Daten; und
ein zehntes Bestimmungssubmodul (115), konfiguriert zum Bestimmen des Benutzers aus den Familienmitgliedern.

## Revendications

1. Procédé de blanchissage intelligent, comprenant :
la détermination d'un utilisateur actuel d'une machine à laver (101, 201, 301, 401, 501) ;
la détermination de caractéristiques de lavage de l'utilisateur (102), dans lequel les caractéristiques de lavage de l'utilisateur comprennent au moins un intervalle de lavage, une quantité du linge, un poids du linge, un type du linge, une matière du linge, un degré de souillure du linge et/ou une exigence de propreté du linge ;
la détermination de paramètres de lavage du linge en fonction des caractéristiques de lavage (103, 203, 304, 403, 504), dans lequel les paramètres de lavage comprennent une vitesse de rotation, une durée de lavage et un nombre de cycles de lavage ; et
le lavage du linge en fonction des paramètres de lavage (104, 204, 305,404, 505)
**caractérisé en ce que** :
la détermination des caractéristiques de lavage de l'utilisateur (102) comprend :
la génération des caractéristiques de lavage de l'utilisateur en fonction d'enregistrements de lavage de l'utilisateur ayant utilisé la machine à laver précédemment (202) ;
lorsque les caractéristiques de lavage comprennent un intervalle de lavage, une quantité du linge et un poids du linge, la détermination des paramètres de lavage du linge en fonction des caractéristiques de lavage (103, 203, 304, 403, 504) comprend :
la détermination que l'intervalle de lavage, la quantité du linge et le poids du linge satisfont une première condition, dans lequel lorsque l'intervalle de lavage est supérieur à un premier seuil, la quantité du linge est supérieure à un deuxième seuil et le poids du linge est supérieur à un troisième seuil, la première condition est satisfaite ;
lorsque l'intervalle de lavage, la quantité du linge et le poids du linge satisfont la première condition, la détermination des paramètres de lavage comprenant une première vitesse de rotation, une première durée de lavage et un premier nombre de cycles de lavage ; et
lorsque l'intervalle de lavage, la quantité du linge et le poids du linge ne satisfont pas la première condition, la détermination des paramètres de lavage comprenant une deuxième vitesse de rotation, une deuxième durée de lavage et des deuxièmes cycles de lavage, dans lequel la première vitesse de rotation est supérieure à la deuxième vitesse de rotation, la première durée de lavage est supérieure à la deuxième durée de lavage, le premier nombre de cycles de lavage est supérieur au deuxième nombre de cycles de lavage ;
lorsque les éléments de lavage comprennent la matière du linge, la détermination des paramètres de lavage du linge en fonction des caractéristiques de lavage (103, 203, 304, 403, 504) comprend :
lorsque la matière du linge est de la soie ou de la laine, la détermination des paramètres de lavage comprenant une troisième vitesse de rotation, une troisième durée de lavage et un troisième nombre de cycles de lavage ; et
lorsque la matière du linge est du coton, la détermination des paramètres de lavage comprenant une quatrième vitesse de rotation, une quatrième durée de lavage et un quatrième nombre de cycles de lavage, dans lequel la troisième vitesse de rotation est supérieure à la quatrième vitesse de rotation, la troisième durée de lavage est supérieure à la quatrième durée de lavage, le troisième nombre de cycles de lavage est supérieur au quatrième nombre de cycles de lavage.

2. Procédé de blanchissage intelligent selon la revendication 1, dans lequel la détermination des caractéristiques de lavage de l'utilisateur (102) comprend :
l'obtention de l'âge et du sexe de l'utilisateur lorsqu'il s'agit d'un nouvel utilisateur (302) ; et
la détermination des caractéristiques de lavage de l'utilisateur en fonction de son âge et de son sexe (303).

3. Procédé de blanchissage intelligent selon la revendication 1 ou 2, dans lequel la détermination des caractéristiques de lavage de l'utilisateur (102) comprend :
la génération des caractéristiques de lavage de l'utilisateur en fonction d'enregistrements de lavage de membres de la famille de l'utilisateur lorsque l'utilisateur est un nouvel utilisateur (402).

4. Procédé de blanchissage intelligent selon l'une quelconque des revendications 1 à 3, dans lequel la détermination des caractéristiques de lavage de l'utilisateur comprend :
la détection d'une quantité, d'un poids, d'une matière et d'un degré de souillure du linge (502) ; et
la détermination des caractéristiques de lavage de l'utilisateur en fonction de la quantité, du poids, de la matière et du degré de souillure du linge (503).

5. Procédé de blanchissage intelligent selon l'une quelconque des revendications 1 à 4, dans lequel la détermination de l'utilisateur actuel de la machine à laver (101, 201, 301, 401, 501) comprend :
la détermination de l'utilisateur en fonction d'informations de connexion de l'utilisateur qui se connecte à la machine à laver ;
ou
l'obtention d'utilisateurs qui accèdent à un réseau domestique et la détermination de l'utilisateur parmi les utilisateurs qui accèdent au réseau domestique ; ou
la détermination de membres de la famille en fonction de données collectées par une caméra, et la détermination de l'utilisateur parmi les membres de la famille.

6. Dispositif de blanchissage intelligent, comprenant :
un premier module de détermination (11), configuré pour déterminer un utilisateur actuel d'une machine à laver ;
un deuxième module de détermination (12), configuré pour déterminer des caractéristiques de lavage de l'utilisateur, dans lequel les caractéristiques de lavage de l'utilisateur comprennent au moins un intervalle de lavage, une quantité du linge, un poids du linge, un type du linge, une matière du linge, un degré de souillure du linge et/ou une exigence de propreté du linge ;
un troisième module de détermination (13), configuré pour déterminer des paramètres de lavage du linge en fonction des caractéristiques de lavage, dans lequel les paramètres de lavage comprennent une vitesse de rotation, une durée de lavage et un nombre de cycles de lavage ; et
un module de lavage (14), configuré pour laver le linge en fonction des paramètres de lavage
**caractérisé en ce que** :
le deuxième module de détermination (12) comprend un premier sous-module de génération (121), configuré pour générer les caractéristiques de lavage de l'utilisateur en fonction d'enregistrements de lavage de l'utilisateur qui a utilisé la machine à laver précédemment ;
lorsque les caractéristiques de lavage comprennent un intervalle de lavage, une quantité du linge et un poids du linge, le troisième module de détermination (13) comprend :
un sous-module d'évaluation (131), configuré pour déterminer que l'intervalle de lavage, la quantité du linge et le poids du linge satisfont ou non une première condition, dans lequel lorsque l'intervalle de lavage est supérieur à un premier seuil, la quantité du linge est supérieure à un deuxième seuil et le poids du linge est supérieur à un troisième seuil, la première condition est satisfaite ;
un troisième sous-module de détermination (132), configuré pour déterminer les paramètres de lavage comprenant une première vitesse de rotation, une première durée de lavage et un premier nombre de cycles de lavage, lorsque l'intervalle de lavage, la quantité du linge et le poids du linge satisfont la première condition ; et
un quatrième sous-module de détermination (133), configuré pour déterminer les paramètres de lavage comprenant une deuxième vitesse de rotation, une deuxième durée de lavage et un deuxième nombre de cycles de lavage, lorsque l'intervalle de lavage, la quantité du linge et le poids du linge ne satisfont pas la première condition, dans lequel la première vitesse de rotation est supérieure à la deuxième vitesse de rotation, la première durée de lavage est supérieure à la deuxième durée de lavage, le premier nombre de cycles de lavage est supérieur au deuxième nombre de cycles de lavage ;
lorsque les caractéristiques de lavage comprennent la matière du linge, le troisième module de détermination (13) comprend :
un cinquième sous-module de détermination (134), configuré pour déterminer les paramètres de lavage comprenant une troisième vitesse de rotation, une troisième durée de lavage et un troisième nombre de cycles de lavage, lorsque la matière du linge est de la soie ou de la laine ; et
un sixième sous-module de détermination (135), configuré pour déterminer les paramètres de lavage comprenant une quatrième vitesse de rotation, une quatrième durée de lavage et un quatrième nombre de cycles de lavage lorsque la matière du linge est du coton, dans lequel la troisième vitesse de rotation est supérieure à la quatrième vitesse de rotation, la troisième durée de lavage est supérieure à la quatrième durée de lavage, le troisième nombre de cycles de lavage est supérieur au quatrième nombre de cycles de lavage.

7. Dispositif de blanchissage intelligent selon la revendication 6, dans lequel le deuxième module de détermination (12) comprend en outre :
un premier sous-module de réception (122), configuré pour obtenir l'âge et le sexe de l'utilisateur lorsque celui-ci est un nouvel utilisateur ; et
un premier sous-module de détermination (123), configuré pour déterminer les caractéristiques de lavage de l'utilisateur en fonction de l'âge et du sexe de l'utilisateur.

8. Dispositif de blanchissage intelligent selon la revendication 6 ou 7, dans lequel le deuxième module de détermination (12) comprend en outre :
un deuxième sous-module de génération (124), configuré pour générer les caractéristiques de lavage de l'utilisateur en fonction d'enregistrements de lavage de membres de la famille de l'utilisateur lorsque celui-ci est un nouvel utilisateur ;
ou
le deuxième module de détermination (12) comprend :
un sous-module de détection (125), configuré pour détecter une quantité, un poids, une matière et un degré de souillure du linge ; et
un deuxième sous-module de détermination (126), configuré pour déterminer les caractéristiques de lavage de l'utilisateur en fonction de la quantité, du poids, de la matière et du degré de souillure du linge.

9. Dispositif de blanchissage intelligent selon la revendication 8, dans lequel le premier module de détermination (11) comprend :
un septième sous-module de détermination (111), configuré pour déterminer l'utilisateur en fonction d'informations de connexion de l'utilisateur qui se connecte à la machine à laver ;
ou
le premier module de détermination (11) comprend :
un deuxième sous-module de réception (112), configuré pour obtenir des utilisateurs qui accèdent à un réseau domestique ; et
un huitième sous-module de détermination (113), configuré pour déterminer l'utilisateur parmi les utilisateurs qui accèdent au réseau domestique ; ou
le premier module de détermination (11) comprend :
un neuvième sous-module de détermination (114), configuré pour déterminer des membres de la famille en fonction de données collectées par une caméra ; et
un dixième sous-module de détermination (115), configuré pour déterminer l'utilisateur parmi les membres de la famille.
